# EUROPEAN PATENT APPLICATION

(11) **EP 2 889 598 A1**
(43) Date of publication of application: **01.07.2015**
(21) Application number: 14196043.5
(22) Date of filing: 03.12.2014
(51) Int. Cl.: G01L 19/00, G01L 19/06

(54) **Pressure sensor**

(30) Priority: 24.12.2013 JP 2013265876
(71) Applicant: Fujikoki Corporation, Tokyo 158-0082 (JP)
(72) Inventor: Takatsuki, Osamu, Setagaya-ku, Tokyo 158-0082 (JP); Aoyama, Tomohisa, Setagaya-ku, Tokyo 158-0082 (JP); Mukai, Motohisa, Setagaya-ku, Tokyo 158-0082 (JP)
(74) Representative: Schweiger, Martin

(57) **Abstract**

Provided is a pressure sensor that is equipped with a pressure detection element and is capable of preventing data of an EPROM from being lost by application of high-voltage pulse noise to a writing terminal. A GND terminal (21 d) that is one of output terminals of the pressure detection element (21) and an EPROM drain terminal (21 h) that is one of EPROM writing terminals are connected via a capacitor (60). The GND terminal (21 d) is grounded via a lead pin (33A). With this configuration, even when the high-voltage pulse noise is applied to the EPROM drain terminal (21 h) and a lead pin (36a) connected to the EPROM drain terminal (21 h), the high-voltage pulse noise can be released to ground via the capacitor (60), and data of EPROM (21 a) can be prevented from being lost.

## Description

### BACKGROUND OF THE INVENTION

### 1. Field of the Invention

The present invention relates to a pressure sensor equipped with a pressure detection element having an erasable programmable read only memory (EPROM) and a terminal for writing to the EPROM and, more particularly, to a pressure sensor capable of preventing information stored in an EPROM from being erased by high-voltage pulse noise applied to an EPROM writing terminal.

### 2. Description of the Related Art

Conventionally, various proposals have been made for a pressure sensor configured to enclose a liquid in a pressure receiving space in which a pressure detection element having a non-volatile memory such as an erasable programmable read only memory (EPROM) is held, and to transmit a pressure applied from the outside to a pressure detection chamber to the pressure detection element via the liquid so as to output a voltage signal corresponding to the external pressure from the pressure detection element.

As an example of the hydraulic pressure sensor, a pressure sensor is described in Patent Document 1 which receives a fluid pressure through a diaphragm, detects the pressure transmitted via the enclosed liquid using a sensor chip (pressure detection element), converts the detected pressure into voltage, is connected to multiple electrode pins (lead pins) disposed on a concentric circle of a base by bonding wires, and outputs the voltage to the outside via a circuit board.

Further, the voltage output from the pressure detection element of the pressure sensor cannot be used as external output with no change at the time of manufacture or due to a variation in parts, and correction corresponding to characteristics of individual pressure sensors becomes essential. As described in Patent Document 2, voltage correction is generally performed by previously storing correction information in a read-only memory and reading stored information in the event of pressure measurement to correct voltage.

In this case, the lead pins are arranged along with lead pins for the voltage correction (hereinafter referred to as "for the adjustment") other than lead pins for the output. The output lead pins are soldered to the circuit board, and transmit a voltage signal from the pressure detection element via the circuit board, for instance, to an external output lead drawn out of the center of the pressure sensor. However, the adjustment lead pins are only used in storing the correction information at the time of manufacture, and are not connected to the external output lead. Further, the output lead pins and the adjustment lead pins are typically arranged in each individual group in consideration of a structure of the pressure detection element and ease of the adjustment work.

### CITATION LIST

### PATENT DOCUMENT

Patent Document 1: JP 2001-41838 A
Patent Document 2: JP S62-175631 A

### SUMMARY OF THE INVENTION

However, in the conventionally-used pressure sensors, there has been a problem that data of the EPROM may be erased. As a result of the investigation for proving the cause, it is found out that data loss is caused when high-voltage pulse noise is applied to the pressure detection element. When investigating the cause in greater detail, in some cases, if the high-voltage pulse noise is repetitively applied to an EPROM drain terminal, charges stored in a floating gate are reduced, and bit missing occurs at the data stored in the EPROM, that is, the erasure of the stored data occurs. Thereby, it is found out that a correct signal is not output from the pressure detection element, and as a result, it happens that the pressure sensor is not operated in a correct behavior.

Accordingly, the invention has been made to solve the above problems, and an object of the present invention is to provide a pressure sensor configured to prevent various data stored in an EPROM from being lost by high-voltage pulse noise applied to an EPROM writing terminal of a pressure detection element.

To achieve the object, according to an embodiment of the invention, there is provided a pressure sensor (1) equipped with a pressure detection element (21) having: multiple output terminals (21 b to 21 d) at least including a ground terminal (21 d) for grounding; a non-volatile memory (21 a); and a drain terminal (21 h) and a control gate terminal (21 i) which are two terminals for non-volatile memory writing, wherein the ground terminal (21 d) and the drain terminal (21 h) are electrically connected via a noise removal element.

In the pressure sensor, the output terminals (21 b to 21 d), and the control gate terminal (21i) and the drain terminal (21 h) for the non-volatile memory writing are connected to respective lead pins (33 and 37); the lead pins (33 and 37) are fixed to a board (31); and the noise removal element is disposed at the board (31).

In the pressure sensor, the lead pins (33) are connected to leads (32) for external device connection.

As described above, according to the invention, it is possible to protect various data stored in a non-volatile memory such as an EPROM with which the pressure detection element of the pressure sensor is equipped from a fear of data loss caused by high-voltage pulse noise.

### BRIEF DESCRIPTION OF THE DRAWINGS

Figs. 1A and 1B are a view illustrating an embodiment of a pressure sensor according to the invention, wherein Fig. 1A is a longitudinal cross-sectional view, and Fig. 1B is a view taken in the arrow direction of line A-A of Fig. 1A with connectors 34 and a cover 35 removed; and

Fig. 2 is an electric circuit diagram illustrating the pressure sensor according to the invention.

### DETAILED DESCRIPTION OF THE PREFERRED EMBODIMENTS

Hereinafter, an embodiment of the invention will be described in detail with reference to the drawings.

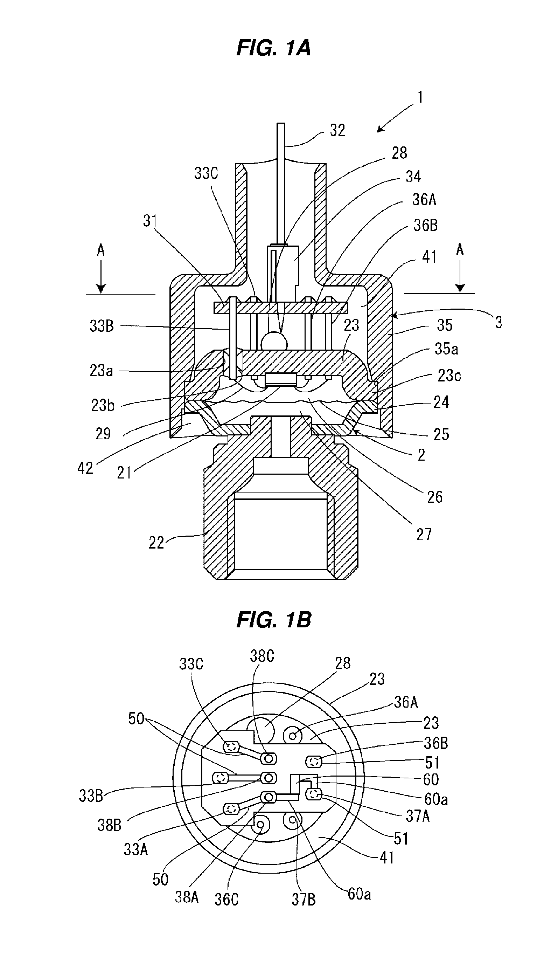

Figs. 1A and 1B illustrate an embodiment of a pressure sensor according to the invention. A pressure sensor 1 is equipped with a pressure detection part 2 which has a pressure detection element 21 inside thereof and to which a fluid inflow part 22 is connected, and a connector joint 3 that surrounds the pressure detection part 2 and houses external output leads 32 and a circuit board (hereinafter referred to as a "board") 31 connected to the pressure detection element 21.

The pressure detection part 2 includes the pressure detection element 21, a base 23, a backing member 24 disposed opposite to the base 23, and a diaphragm 25 sandwiched by the base 23 and the backing member 24. A dielectric liquid such as oil is enclosed in a pressure receiving space 26 between the base 23 the diaphragm 25. The pressure detection element 21 is fixed to the base 23 in the pressure receiving space 26. A pressurizing space 27 is formed between the backing member 24 and the diaphragm 25 as a pressure introducing space. An internal space of the fluid inflow part 22 communicates with the pressurizing space 27.

The base 23 is formed in a lid shape. The pressure detection element 21 is fixed to a lower surface of the base 23. The backing member 24 is formed in the shape of a dish whose upper side is open. The fluid inflow part 22 is fixed to a central opening of the backing member 24 by brazing. An outer circumferential edge of the diaphragm 25 is interposed between a flange of the base 23 and a flange of the backing member 24. These three members 23 to 25 are simultaneously welded at outer circumferential edge portions to which the outer circumferential edge of the diaphragm 25 is exposed by, for instance, laser welding, and are integrated as the pressure detection part 2. After a liquid (oil) is injected into the pressure receiving space 26 from a filling hole (not illustrated) formed by penetrating the base 23, the filling hole is blocked on an upper surface of the base 23 by a ball 28.

The pressure detection element 21 is, for instance, a piezo element. The piezo element is a kind of ferroelectric, and is also called a piezoelectric element. When vibration or a force such as a pressure is applied to the piezo element, voltage is generated. Conversely, when voltage is applied to the piezo element, the piezo element is expanded and contracted.

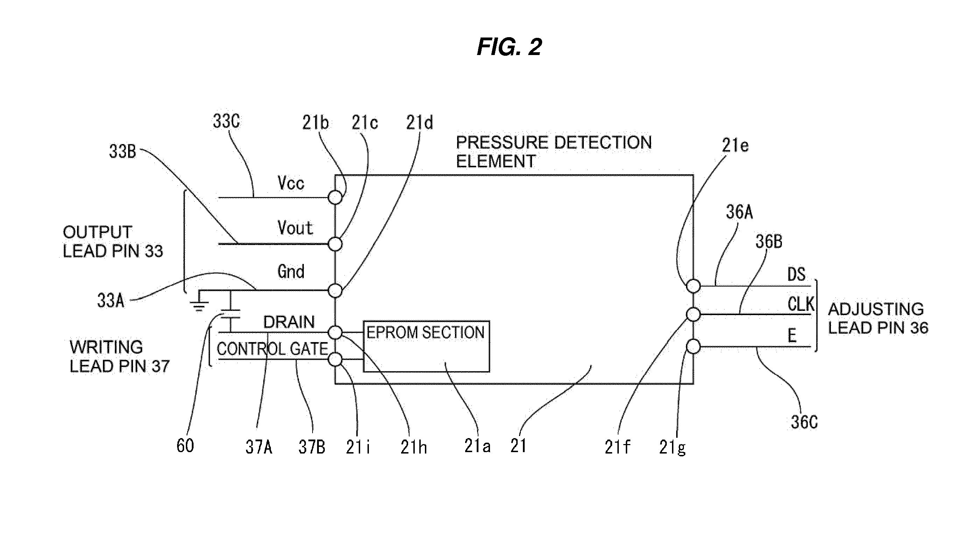

As illustrated in Fig. 2, the pressure detection element 21 includes an output terminal, an adjusting terminal, and an EPROM writing terminal. These terminals are bonding pads provided for the pressure detection element 21. The output terminal is made up of a Vcc terminal 21 b for power input, a Vout terminal 21c for signal output, and a GND terminal 21 d for grounding. Further, the adjusting terminal is made up of a DS terminal 21 e for serial data input/output, a CLK terminal 21f for shift register clock input, and an E terminal 21 g for controlling enable/disable of an adjusting signal. The EPROM writing terminal is made up of a control gate terminal 21 i and a drain terminal 21 h. The terminals are electrically connected to output lead pins 33 (a GND lead pin 33A, a signal output lead pin 33B, and a voltage supply lead pin 33C) inserted into through-holes 23a formed in the base 23, adjusting lead pins 36 (a lead pin 36A for the serial data input/output terminal, a lead pin 36B for the shift register clock input terminal, and a lead pin 36C for the enable terminal), and EPROM writing lead pins 37 (a lead pin 37A for the EPROM drain and a lead pin 37B for the EPROM control gate) via bonding wires 29, respectively. The output lead pins 33 are designed to output a voltage signal, which corresponds to a pressure detected by the pressure detection element 21, to the outside, and the adjusting lead pins 36 and the EPROM writing lead pins 37 are, as described above, used for the voltage correction at the time of manufacture.

Further, upper ends of the output lead pins 33 (33A to 33C), one 36B of the three adjusting lead pins 36, and one 37A of the EPROM writing lead pins 37 are fixed to the board 31. In order to connect ant fix the output lead pins 33A to 33C, three wiring patterns 50 made of a metal foil are formed on a surface of the board 31, and two metal foils 51 for fixing the adjusting lead pin 36B and the EPROM writing lead pin 37A are formed on a surface of the board 31.

Connectors 34 are connected to a GND connection terminal 38A, a signal output terminal 38B, and a voltage supply terminal 38C, respectively, which are provided for the board 31 and are electrically connected to a GND lead, a signal output lead, and a voltage supply lead (not illustrated) of the external output leads 32. Further, the three wiring patterns 50 are formed to connect each of the output lead pins 33A to 33C and each of the three external output leads 32 connected to the board 31 via the connectors 34.

The two metal foils 51 are provided only to fix each of the adjusting lead pin 36B and the EPROM writing lead pin 37A to the board 31. The adjusting lead pin 36B is electrically disconnected from the other lead pins on the board 31. Further, the GND lead pin 33A of the output lead pins 33 and the EPROM writing lead pin 37A are connected via a capacitor 60 by a metal foil 60a. A capacitor 60 is an example of a noise removal element.

Fig. 2 illustrates the pressure detection element 21 and the various lead pins with which the aforementioned pressure sensor 1 is equipped in an electric circuit diagram. As is also apparent from Figs. 1A and 1B, the EPROM drain 37A that is the EPROM writing lead pin is connected to the GND lead pin 33A that is the output lead pin via the capacitor 60. Thereby, high-voltage pulse noise applied to the EPROM writing lead pin 37 can be released to the GND lead pin 33A. The GND lead pin 33A is grounded via the external output lead 32, and can thus absorb the pulse noise.

The three leads 32 are connected to the output lead pins 33A to 33C via the respective connectors 34. On the other hand, the adjusting lead pins 36A to 36C and the EPROM writing lead pins 37A and 37B are only used for adjustment prior to actual use of the pressure sensor 1, and are not connected to the leads. Accordingly, as illustrated in Figs. 1A and 1B, when the output lead pins 33A to 33C, the adjusting lead pins 36A to 36C, and the EPROM writing lead pins 37A and 37B are disposed around the pressure detection element 21 to be formed in an approximate ring shape, and when the external output leads 32 are adapted to be pulled out in a central axis direction of the pressure detection element 21 (a central axis direction of the pressure sensor 1), since the output lead pins 33A to 33C and the external output leads 32 are eccentric, simply connecting these through the board 31 has a possibility that, when a force such as tension is applied to the external output leads 32, the output lead pins 33A to 33C are subjected to lateral stress and are deformed, and also hermetic seals 23b, which surround the respective lead pins 33A to 33C and are to be described below, are destroyed.

However, as in the present embodiment, the adjusting lead pin 36 (the symbol 36B in the case of the present embodiment) and the EPROM writing lead pin 37 (the symbol 37A in the case of the present embodiment) which are located opposite to the output lead pins 33A to 33C with respect to the pressure detection element 21 (in other words, the center of the ring) are fixed to the board 31. Thereby, even when a force such as tension is applied to the external output leads 32, no lateral stress is applied to the output lead pins 33A to 33C. As a result, the hermetic seal 23b surrounding each of the output lead pins 33A to 33C, the adjusting lead pin 36B, and the EPROM writing lead pin 37A is unlikely to be destroyed.

In this way, the output lead pins 33 as well as the adjusting lead pin 36 and the EPROM writing lead pin 37, both of which need not be fundamentally fixed to the board 31, are fixed to the board 31, and thereby strength of the overall structure of the output lead pins 33, the board 31, the adjusting lead pin 36B, and the EPROM writing lead pin 37A can be enhanced, and structural weakness around the output lead pins 33 can be improved.

After the output lead pins 33, the adjusting lead pins 36 and the EPROM writing lead pins 37 are inserted into the through-holes 23a of the base 23, the through-holes 23a are sealed by the hermetic seals 23b such that leakage of the liquid (oil) does not occur. The connectors 34 are mounted on the board 31, and a voltage signal from the pressure detection element 21 is extracted from the external output leads 32 to the outside via the output lead pins 33, the board 31, and the connectors 34.

The connector joint 3 includes a cover 35 housing the pressure detection part 2 so as to be fitted with the base 23 from the outside to cover the side of the backing member 24. The cover 35 also functions as a connector case that covers the board 31 and the connectors 34. The cover 35 is formed of a synthetic resin such as polyphenylether (PPE), is reduced in diameter at its upper end covering the connectors 34 so as to surround the external output leads 32, and is formed in a large diameter shape extending in a tubular skirt shape at its lower end side housing the pressure detection part 2.

The cover 35 has an annular step 35a that is formed at an inner circumference side of a large diameter end side thereof and has approximately the same diameter as an outer diameter of the base 23. The base 23 is mounted such that an annular corner 23c that is an outer diameter corner is fitted and seated on the annular step 35a.

An internal space of the cover 35 is separated by the base 23 mounted in the cover 35, and a space 41 is formed. The output lead pins 33, the adjusting lead pins 36, the EPROM writing lead pins 37, the board 31, the connectors 34, and the external output leads 32 are housed in the space 41. The space 41 is filled with an adhesive such as a urethane resin that has high adhesiveness to the cover 35 and the external output leads 32 and high elasticity, and then the adhesive is cured. Since the space 41 is filled with the adhesive such that the output lead pins 33, the adjusting lead pins 36, the EPROM writing lead pins 37, the board 31, the connectors 34, and the external output leads 32 become buried, the adhesive performs a sealing function on the components such as the board 31 and the connectors 34.

Further, it takes some time to cure the adhesive. However, even when the tension is applied to the external output leads until the adhesive is cured, the deformation of the lead pins and the destruction of the hermetic seals 23b are prevented as described above. Of course, after the adhesive is cured, an effect of preventing the deformation and the destruction is achieved. Further, a space 42 formed by the backing member 24 and the cover 35 is also sealed by, for instance, a resin.

In the pressure sensor 1 having the aforementioned configuration, a pressure of the pressurizing space 27 is changed to deform the diaphragm 25 by a change in pressure of a fluid flowing in from the fluid inflow part 22. A pressure of the liquid (oil) enclosed in the pressure receiving space 26 is changed by the deformation of the diaphragm 25, and such a change in pressure is propagated to the pressure detection element 21. The pressure detected by the pressure detection element 21 is converted into voltage. At this time, predetermined voltage correction corresponding to the characteristics of the pressure sensor 1 is performed by the electronic circuit mounted in the pressure detection element 21. A voltage signal after the correction is transmitted to the external output leads 32 via the bonding wires 29, the output lead pins 33, the board 31, and the connectors 34.

In the aforementioned embodiment, one 36B of the three adjusting lead pins 36 and one 37A of the two EPROM writing lead pins 37 are fixed to the board 31. However, only the EPROM writing lead pin 37A may be fixed to the board 31. Further, three or more including the three adjusting lead pins 36 and one 37A of the two EPROM writing lead pins 37 may be fixed to the board 31.

Further, the configuration in which the pulse noise applied to the EPROM writing lead pin 37 is released to the GND lead pin has been described as the capacitor 60, but it is not limited thereto. The pulse noise may be released using various means (noise removal elements) in place of the capacitor 60. For example, a configuration in which voltage from rated power is conducted to the side of the EPROM using a chip varistor, and the pulse noise of high voltage is released to the side of the GND lead pin 33A may be adopted without any problem.

## Claims

1. A pressure sensor equipped with a pressure detection element comprising:
multiple output terminals at least including a ground terminal for grounding; a non-volatile memory; and a control gate terminal and a drain terminal which are two terminals for non-volatile memory writing,
wherein the output terminals and the control gate terminal and the drain terminal for the non-volatile memory writing are connected to respective lead pins, and
the lead pin connected to the ground terminal and the lead pin connected to the drain terminal are electrically connected via a noise removal element.

2. The pressure sensor according to claim 1, wherein the lead pins are fixed to a board, and the noise removal element is disposed at the board.

3. The pressure sensor according to claim 2, wherein the lead pins are connected to leads for external device connection.
